**Europäisches Patentamt**

**European Patent Office**

**Office européen des brevets**

(19)

(11) Veröffentlichungsnummer: **0 257 604**
**B1**

(12) ## EUROPÄISCHE PATENTSCHRIFT

(45) Veröffentlichungstag der Patentschrift:
**03.01.90**

(51) Int. Cl.⁴: **B60R 22/18**

(21) Anmeldenummer: **87112240.4**

(22) Anmeldetag: **24.08.87**

(54) **Umlenkklemmer.**

(30) Priorität: **27.08.86 DE 3629091**

(43) Veröffentlichungstag der Anmeldung:
**02.03.88 Patentblatt 88/9**

(45) Bekanntmachung des Hinweises auf die Patenterteilung:
**03.01.90 Patentblatt 90/1**

(84) Benannte Vertragsstaaten:
**DE FR GB**

(56) Entgegenhaltungen:
**DE-A- 3 423 360**
**GB-A- 2 167 643**
**US-A- 4 185 791**

(73) Patentinhaber: **Autoliv-Kolb GmbH & Co.,**
**Theodor-Heuss-Strasse 2, D-8060 Dachau(DE)**

(72) Erfinder: **Ernst, Hans-Helmut, Eschenweg 4,**
**D-2061 Sülfeld(DE)**

(74) Vertreter: **Görg, Klaus, Dipl.-Ing. et al, Hoffmann, Eitle &**
**Partner Arabellastrasse 4 (Sternhaus),**
**D-8000 München 81(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf einen Umlenkklemmer gemäß dem Oberbegriff des Anspruchs 1.

Ein derartiger Umlenkklemmer ist aus der DE-OS 3 423 360 bekannt. Hier wird das Steuerorgan von einer Rolle oder einem Zapfen gebildet, die gehäuseseitig in zur Gurtbandverlaufsrichtung geneigten Langlöchern geführt ist. Diese Rolle bildet eine Umlenkung für das Gurtband und wirkt auf einen gehäuseseitig an einer Schrägfläche geführten Klemmkeil. Wenn eine bestimmte Zugkraft auf das Gurtband wirkt, so erfolgt im Bereich der Umlenkung durch die Streckung des Gurtbandes eine Verschiebung der Rolle und somit unmittelbar des Klemmkeils hinsichtlich einer Klemmung des Gurtbandes. Dieser Klemmkeil bewegt sich dabei zusammen mit einem zweiten Klemmteil synchron mit der geringfügigen Bewegung des Gurtbandes, so daß eine schonende Behandlung des Gurtbandes gewährleistet ist. Im Vordergrund steht allerdings hier die Entlastung des Aufrollmechanismus des Gurtbandes auch dann, wenn ein geringer Schlupf im Umlenkklemmer eintritt. Dies wird dadurch bewerkstelligt, daß der zuvor genannten beweglichen Umlenkrolle eine feste Umlenkrolle zugeordnet ist, so daß dort eine Doppelumlenkung des Gurtbandes erfolgt und sich der möglicherweise auftretende Schlupf im Klemmbereich nicht auf den Aufrollmechanismus auswirken kann.

Dieser bekannte Klemmechanismus hat den Nachteil, daß das Umlenkelement unmittelbar auf den Klemmkeil wirkt, um diesen entlang der Gleitrampe zu verschieben. Dadurch ist es schwierig, das System so einzustellen, daß die vorerwähnte Synchronbewegung des Klemmkeiles mit dem Gurtband erzielbar ist.

Der Erfindung liegt die Aufgabe zugrunde, einen Umlenkklemmer der genannten Art zu schaffen, bei dem die Bewegung des Klemmkeils besser an die Bewegung des Gurtbandes hinsichtlich einer Synchronbewegung während der Klemmanlage verbessert werden kann, um so besser als beim Stand der Technik eine schonende Gurtbandklemmung insbesondere dann zu erzielen, wenn die relativ häufige Gebrauchklemmung außerhalb einer unfallbedingten Klemmung erfolgt.

Diese Aufgabe wird erfindungsgemäß durch die Merkmale des Anspruchs 1 gelöst.

Bei dieser Lösung kann der Steuerhebel nach Art einer getriebemäßigen Übersetzung die vom Gurtband induzierte Bewegung in den beweglichen Klemmkeil einleiten, so daß die Bewegung des Klemmkeils feinfühliger dahingehend eingestellt werden kann, daß in Abhängigkeit von der Schräglage der Wirkfläche besser als bisher eine Synchronbewegung zwischen Klemmkeil und Gurtband in der Gurtbandverlaufsrichtung bei der Herstellung der Klemmung erzielt werden kann. Dies führt zu einer besseren Sicherstellung eines schonenden Eingriffs des Klemmkeils mit dem Gurtband, insbesondere bei der häufig auftretenden Gebrauchsklemmung außerhalb einer unfallbedingten Klemmung.

Der Winkel ($\alpha$) hängt von den jeweiligen Verhältnissen ab. Bei kurzem Bauabstand zwischen Umlenkklemmer und Aufroller (kurze Gurtbanddehnlänge), geringem Filmspuleneffekt im Aufroller und niedriger Gurtbanddehnung kann ($\alpha$) klein sein d.h., wenn der Aufroller sperrt, wird relativ wenig Gurtband in Richtung (A) (in Zuglastrichtung) den Umlenkklemmer durchlaufen. In einer Zeiteinheit (t) werden nur wenige Millimeter (mm) am verzahnten Klemmkeil (48) vorbeistreichen, so daß der synchronisierende Vertikalhub des Klemmkeiles auch nur entsprechend gering sein braucht.

Liegt andererseits ein großer Abstand zwischen Aufroller und Umlenkklemmer vor sowie eine größere Gurtbanddehnung und ein größerer Filmspuleneffet, so muß der Winkel ($\alpha$) größer gewählt werden. In der gleichen Zeiteinheit (t) würde eine größere Gurtbandlänge am Klemmkeil (48) vorbeistreichen, so daß der Klemmteil bei der Annäherung an das Gurtband einen schnelleren Hub in vertikaler Richtung (= Gurtauszugsrichtung) haben müßte, um den gewünschten Synchronisationseffekt erzielen zu können.

Die Einstellung des Winkels ($\alpha$) ermöglicht in Anpassung an die jeweiligen Verhältnisse eine einfache und leichte Erzielung des genannten Synchronisationseffektes.

Zweckmäßigerweise ist der Steuerhebel symmetrisch an beiden Seiten des Klemmkeils angeordnet, wobei im Steuerhebel ein Langloch ausgebildet ist, dessen Längsachse entsprechend dem genannten Winkel ($\alpha$) ausgerichtet ist. In das Langloch greift ein am Klemmkeil befindlicher Zapfen ein.

Dabei bildet eine Wand des Langloches die genannte Wirkfläche. Durch Einstellen dieser Wirkfläche kann im Zusammenhang mit der schrägen Gleitfläche der angestrebte Synchronisationseffekt erzielt werden.

Weiterhin kann aber auch am Steuerhebel ein Zapfen angeordnet sein, der an einer freien Wirkfläche des Klemmkeils anliegt, bevorzugt an der hinsichtlich der Gurtabzugsrichtung hinteren Fläche des Klemmkeils. Die Winkelausrichtung dieser Wirkfläche kann dann im erwähnten Sinne eingestellt werden.

Die Breite des Langloches ist vorzugsweise wesentlich größer als die Querschnittsabmessung des Zapfens. Dies hat den Vorteil, daß sich der Zapfen, wenn er sich von der Wirkfläche des Langloches löst, frei im Langloch bewegen kann, ohne daß über den Zapfen eine Kraft auf den Steuerhebel ausgeübt werden kann, wenn sich hinsichtlich eines Selbstklemmeffektes aufgrund des Gurtbandabzuges der Klemmkeil durch den Steuerhebel ungesteuert weiterbewegt.

Dies bedeutet, daß die Abmessung des Langloches um so viel größer als die Querschnittsbemessung des Zapfens sein muß, wie der Klemmkeil sich insgesamt mit dem Gurtband bewegen kann.

Hinsichtlich einer weiteren Entlastung des Steuerhebels bei der ausgeübten Klemmwirkung ist für die Umlenkrolle am Steuerhebel ein Anschlag vorgesehen, der vorzugsweise im Bereich des Umlenkorgans liegt.

Das stationäre Klemmorgan ist vorzugsweise in Gurtbandzugrichtung gegen eine Feder verschiebbar.

Entsprechend einer vorteilhaften weiteren Ausgestaltung ist die Gleitrampe und das stationäre Klemmorgan mit einem Rahmen als ortsfeste Einheit ausgebildet, in der der Klemmkeil über die Steuerhebel bewegbar und darüber hinaus frei bewegbar angeordnet ist. Dies führt zu einem gegenseitigen Aufheben der auftretenden Klemmkräfte senkrecht zur Gurtbandlaufrichtung.

Vorteilhafterweise ist zur Herabsetzung der Reibung das Umlenkorgan als Umlenkrolle ausgebildet und der erwähnte Anschlag als Teil des Rahmens hieran durch eine entsprechende Krümmung angepaßt. Die Umlenkrolle legt sich unter Last am Anschlag an, wenn die Mitnahme des Klemmteils an das Gurtband (Klemmung) stattgefunden hat. Somit ist nun die Umlenkrolle von der Belastung beaufschlagt. Auf diese Weise bleiben die Steuerhebel unbelastet.

Am Rahmen oder an der Gleitrampe sind Rückholfedern angebracht, von denen eine am Steuerhebel und eine andere am Klemmteil angebracht ist, um nach dem Loslassen des Gurtbandes den Klemmkeil und auch den Steuerhebel in eine Ausgangslage zurückzuholen.

Hinsichtlich einer weiteren Kleinhaltung der Bautiefe (t) ist der Steuerhebel im wesentlichen parallel zu einer Montagewand verlaufend angeordnet, wobei das Umlenkorgan zumindest teilweise in eine Durchbrechung der Montagewand ragt. Auch die Drehachse des Steuerhebels befindet sich in unmittelbarer Nähe der Montagewand. Somit erstreckt sich eine Schmalseite senkrecht zum Gurtband, d.h. in der Richtung der Bautiefe (t).

Die Erfindung wird nachfolgend anhand eines in den Zeichnungen bereits schematisch dargestellten Ausführungsbeispiels näher erläutert. Es zeigt

Fig. 1 eine teilweise geschnitten dargestellte Seitenansicht eines Umlenkklemmers, der in der Rückenlehne eines Fahrzeugsitzes untergebracht ist, und

Fig. 2 eine perspektivische Explosionsdarstellung eines Teils des Umlenkklemmers gemäß Fig. 1.

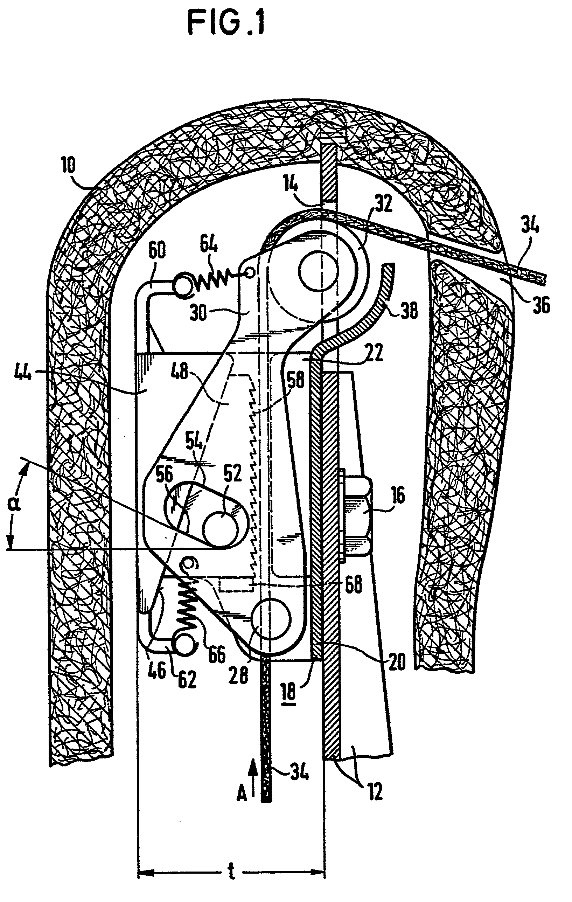

Der in Fig. 1 dargestellte Umlenkklemmer für ein Sicherheitsgurtsystem ist hier beispielsweise in der Rückenlehne (10) eines Fahrzeugsitzes untergebracht. Allerdings könnte ein derartiger Umlenkklemmer auch in der sogenannten B-Säule eines Kraftfahrzeuges untergebracht sein. In jedem Unterbringungsfall gilt, daß für die Unterbringung nur ein beengter Raum zur Verfügung steht und daher die in Fig. 1 angezeigte Bautiefe (t) so gering wie möglich sein sollte.

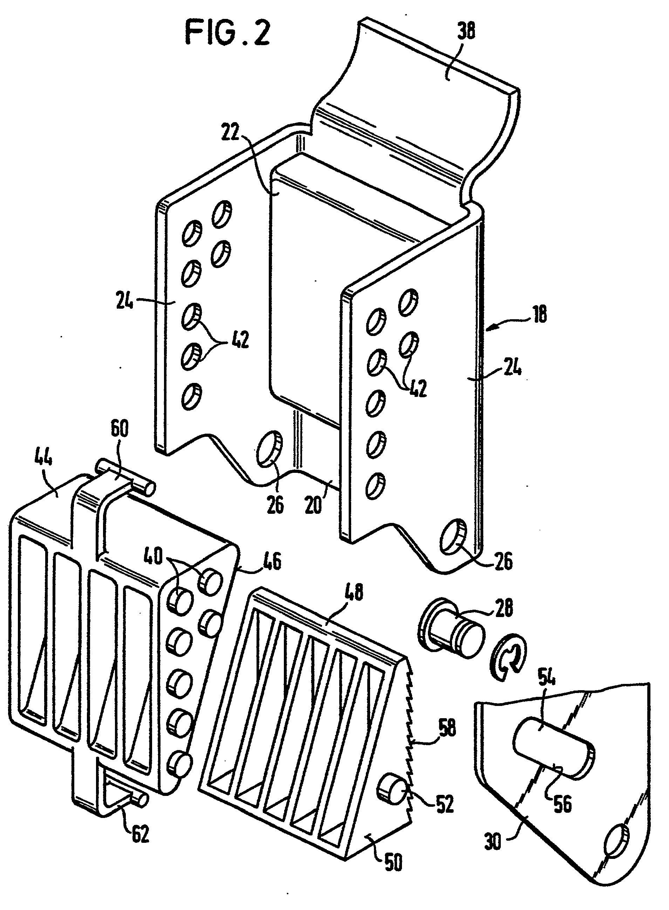

Innerhalb der in Fig. 1 teilweise dargestellten Rückenlehne (10) befindet sich eine Montagewand (12), die im oberen Bereich eine Durchbrechung (14) aufweist. An dieser Montagewand (12) ist mittels einer Schraube (16) ein aus Fig. 2 gut ersichtlicher Rahmen (18) befestigt, und zwar mit einer Rückwand (20), an der innerhalb des Rahmens eine als Klemmorgan wirkende Gegendruckwange (22) angebracht ist. In gegenüberliegenden Seitenwänden (24) des im wesentlichen U-förmigen Rahmens (18) befinden sich in der Nähe der Rückwand (20) im in Fig. 2 unteren Bereich Lageröffnungen (26). In diesen Lageröffnungen sitzen Schwenkzapfen (28) eines Steuerhebels (30). Es ist an jeder Seite des Rahmens ein derartiger Steuerhebel (30) vorgesehen. Der Steuerhebel (30) verläuft mit seiner Längserstreckung im wesentlichen parallel zur Rückwand (20) bzw. zur Montagewand (12) und trägt an dem Schwenkbolzen (28) entgegengesetzten freien Ende eine Umlenkrolle (32) auf, um die ein Gurtband (34) eines Sicherheitsgurtsystems so geführt ist, daß das Sicherheitsgurtband durch eine Öffnung (36) der Rückenlehne (10) zum Sitzbereich des Fahrzeugsitzes geführt ist. Die Umlenkrolle ragt dabei teilweise in die Durchbrechung (14) der Montagewand (12). Gegenüber der Umlenkrolle (32) weist die Rückwand (20) des Rahmens einen abgerundeten Wandanschlag (38) auf, der durch die Durchbrechung (14) ragt.

Fest verbunden über Zapfen (40) und in den Seitenwänden (24) befindliche Löcher ist eine Gleitrampe (44) mit dem Rahmen (18) und somit der Montagewand (12). Die Gleitrampe (44) weist, der Gegendruckwange (22) gegenüberliegend, eine Gleitfläche (46) auf, die entsprechend der Darstellung in Fig. 1 ausgerichtet ist. Zwischen Gegendruckwange (22) und der Gleitrampe (44) befindet sich ein als bewegliches Klemmorgan wirkender Klemmkeil (48), der an gegenüberliegenden Seitenflächen (50) mit Steuerzapfen (52) versehen ist. Diese Steuerzapfen ragen in ein Langloch (54) des Steuerhebels (30) derart, daß die Steuerzapfen (52) auf einer im Winkel ($\alpha$) angeordneten Wirkfläche (56) des Langloches anliegen. Der Durchmesser des Zapfens (52) ist wesentlich kleiner (siehe Fig. 1) als die Querschnittsbemessung des Langloches.

Der Klemmkeil (48) weist eine gezahnte Klemmfläche (58) auf. Zwischen dieser Klemmfläche (58) und der Gegendruckwange (22) verläuft in der in Fig. 1 dargestellten Ausgangslage das Gurtband (34).

Am oberen und unteren Ende der Gleitrampe sind eine Haltezunge (60) und eine Haltezunge (62) angebracht. Am freien Ende der oberen Haltezunge (60) ist eine Rückholfeder (64) angebracht, die mit ihrem anderen Ende am oberen Ende des Steuerhebels befestigt ist. An der unteren Haltezunge (62) ist eine weitere Rückholfeder (66) angebracht, die mit ihrem anderen Ende am Klemmkeil (48) befestigt ist. Die Rückholfeder (64) dient dazu, nach dem Lösen des Gurtbandes den Steuerhebel (30) in die Ausgangslage zurückzuholen, und die Rückholfeder (66) dient dazu, unter diesen Bedingungen den Klemmkeil (48) in die Ausgangslage zurückzuholen. In dieser Ausgangslage liegt die Unterseite des Klemmkeils (48) an einem Anschlag (68) an.

Nunmehr soll die Funktionsweise des Umlenkklemmers beschrieben werden.

Wenn das Gurtband mit einer bestimmten Beschleunigung in Richtung des Pfeiles (A) in Fig. 1 von einem Aufroller abgezogen wird, so wird dadurch auf die Umlenkrolle (32) eine Kraft ausgeübt, die eine Drehung des Steuerhebels (30) in Fig. 1 im Uhrzeigersinn bewirkt. Diese Drehung hat zur Folge, daß die Wirkfläche (56) des Langloches (54) den Zapfen (52) des Klemmkeils (48) mit einer an die Verhältnisse angepaßten Übersetzung so in Richtung senkrecht auf das Gurtband und in Richtung des Pfeiles (A) bewegt, daß die Geschwindigkeitskomponente in Richtung des Pfeiles (A) gleich der Bewegungsgeschwindigkeit des Gurtbandes ist, die über den Steuerhebel (30) die Bewegung des Klemmkeils (48) eingeleitet hat. Sobald ein ausreichender Eingriff der Klemmfläche (58) mit dem Gurtband (34) gegen die Gegendruckwange (22) erfolgt ist, ergibt sich eine weitere Klemmbewegung und Klemmverstärkung selbsttätig mit dem Abzug des Gurtbandes (34). Da weitgehend keine Relativbewegung zwischen Klemmfläche (58) und Gurtband (34) durch den zuvor erwähnten Synchronisationseffekt erfolgt, sind auch dann keine Beschädigungen bzw. ist keine Schwächung des Gurtbandes zu befürchten, wenn die Klemmung häufig bereits bei einer geringen Beschleunigung des Gurtbandes von 1,5g erfolgt.

Wenn das Gurtband (34) losgelassen wird, so ziehen die Rückholfedern (64) und (66) den Steuerhebel (30) und den Klemmkeil (48) zurück in die in Fig. 1 dargestellte Ausgangslage, in der sich das Gurtband (34) frei zwischen Klemmfläche (58) und Gegendruckwange (22) bewegen kann.

## Patentansprüche

1. Umlenkklemmer für ein Sicherheitsgurtsystem
a) mit einem stationären Klemmorgan und einem beweglichen Klemmorgan,
b) das ab einer vorgegebenen Gurtbandzuglast in Klemmanlage an das Gurtband und dieses in Klemmanlage an das stationäre Klemmorgan bringbar ist,
c) wobei das bewegliche Klemmorgan ein Klemmkeil ist, der sich an einer stationären Gleitrampe abstützt, die eine in Gurtbandverlaufsrichtung und in Richtung auf das stationäre Klemmorgan schräg verlaufende Gleitfläche für den Klemmkeil aufweist,
d) wobei ein vom Gurtband angetriebenes Steuerorgan mit einer Wirkfläche zusammenwächst, die im Winkel zur Gurtbandverlaufsrichtung angeordnet ist und
e) wobei bei der Herstellung der Klemmanlage der Klemmkeil in Gurtbandverlaufsrichtung eine Geschwindigkeitskomponente hat, die gleich der Gurtbandabzugsgeschwindigkeit im betreffenden Augenblick ist, dadurch gekennzeichnet daß
f) das Steuerorgan ein Steuerhebel (30) ist, der um eine stationäre Achse (28) drehbar ist,
g) am Steuerhebel (30) ein Umkenkorgan (32) für das Gurtband (34) angeordnet ist,
h) dem Klemmkeil (48) ein Steuerglied (52) zugeordnet ist,
i) welches Steuerglied (52) mit der Wirkfläche (56) zusammenwirkt.
2. Umlenkklemmer nach Anspruch 1, dadurch gekennzeichnet, daß der Steuerhebel (30) auf beiden Seiten des Klemmkeils (48) angeordnet ist, daß im Steuerhebel (30) ein Langloch (54) ausgebildet ist, dessen Längsachse entsprechend dem Winkel (α) der Wirkfläche (56) zur Gurtbandverlaufsrichtung ausgerichtet ist, zumindest hinsichtlich einer die Wirkfläche bildenden Längskante, und daß in das Langloch (54) ein am Klemmkeil (48) befindlicher, das Steuerglied bildender Zapfen (52) eingreift.
3. Umlenkklemmer nach Anspruch 1, dadurch gekennzeichnet, daß der Steuerhebel (30) auf beiden Seiten des Klemmkeils (48) angeordnet ist, und daß am Steuerhebel (30) ein Zapfen angeordnet ist, der an einer Wirkfläche des Klemmkeils anliegt.
4. Umlenkklemmer nach Anspruch 2, dadurch gekennzeichnet, daß die Breite des Langloches (54) wesentlich größer ist als die Querschnittsabmessung des Zapfens (52).
5. Umlenkklemmer nach einem der Ansprüche 1 bis 4, dadurch gekennzeichnet, daß das stationäre Klemmorgan (22) in Gurtbandzugrichtung (A) gegen eine Feder verschiebbar ist.
6. Umlenkklemmer nach einem der Ansprüche 2 bis 5, dadurch gekennzeichnet, daß die Gleitrampe (44) und das stationäre Klemmorgan (22) mit einem Rahmen (18) eine ortsfeste Einheit bilden, in der der Klemmkeil (48) über die Steuerhebel (30) bewegbar angeordnet ist.
7. Umlenkklemmer nach Anspruch 6, dadurch gekennzeichnet, daß das Umlenkorgan (32) eine Umlenkrolle ist.
8. Umlenkklemmer nach Anspruch 7, dadurch gekennzeichnet, daß die Umlenkrolle (32) einem am Rahmen (18) angeordneten Endanschlag (38) zugeordnet ist.
9. Umlenkklemmer nach einem der Ansprüche 2 bis 8, dadurch gekennzeichnet, daß am Rahmen (18) oder an der Gleitrampe (44) Rückholfedern (64, 66) angebracht sind, von denen eine (64) am Steuerhebel (30) und eine (66) am Klemmkeil (48) angebracht ist.
10. Umlenkklemmer nach einem der Ansprüche 2 bis 9, dadurch gekennzeichnet, daß die Steuerhebel (30) im wesentlichen parallel zu einer Montagewand (12) verlaufen, und zwar mit parallel zur Montagewand liegender Schwenkachse (28), daß dabei das Umlenkorgan (32) zumindest teilweise in eine Durchbrechung (14) der Montagewand (12) ragt und die Drehachse (28) nahe der Montagewand (12) liegt.

## Claims

1. Guide clamp for a safety belt system
a) comprising a stationary clamping member and a movable clamping member,
b) which can be brought by a pre-determined tensional belt loading into clamping position on the stationary clamping member,
c) the movable clamping member being a clamping wedge which abuts on a stationary slide ramp which has a slide surface for the clamping wedge extending obliquely of the belt path direction and in the direction of the stationary clamping member,
d) a control member driven by the belt cooperating with an active surface which is arranged at an angle to the belt path direction, and
e) in achieving the clamping position, the clamping wedge has a velocity component in the belt path direction which at the relevant instant is equal to the belt extraction velocity, characterised in that

f) the control member is a control lever (30) which is rotatable about a stationary axis (28),

g) a deflector member (32) for the belt (34) is arranged on the control lever (30),

h) an end stop (38) is provided for the control lever (30), (and) a control member (52) is provided for the clamping wedge (48),

i) which control member (52) cooperates with the active surface (56).

2. Guide clamp according to claim 1 characterised in that the control lever (30) is arranged on both sides of the clamping wedge (48), in that in the control lever (30), a slot (54) is provided whose longitudinal axis is directed relative to the belt extension direction according to the angle ($\alpha$) of the active surface (56), at least in respect of a longitudinal edge forming the active surface, and in that a pin (52) forming the control member and located on the clamping wedge (48) engages in the slot (54).

3. Guide clamp according to claim 1 characterised in that the control lever (30) is arranged on both sides of the clamping wedge (48) and in that a pin is arranged on the control lever' (30) which abuts an active surface of the clamping wedge.

4. Guide clamp according to claim 2 characterised in that the width of the slot (54) is substantially larger than the cross-sectional dimension of the pin (52).

5. Guide clamp according to any of claims 1 to 4 characterised in that the stationary clamping member (22) is displaceable in the belt tension direction (A) against the spring.

6. Guide clamp according to any of claims 2 to 5 characterised in that the slide ramp (44) and the stationary clamping member (22) form a stationary unit with a frame (18), in which unit the clamping wedge (48) is arranged for movement via the control lever (30).

7. Guide clamp according to claim 6 characterised in that the deflection member (32) is a deflection roller.

8. Guide clamp according to claim 7 characterised in that the deflection roller (32) is provided with an end-stop (38) arranged on the frame (18).

9. Guide clamp according to any of claims 2 to 8 characterised in that return springs (64, 66) are mounted on the frame (18) or on the slide ramp (44), of which one (64) is mounted on the control lever (30) and one (66) is mounted on the clamping wedge (48).

10. Guide clamp according to any of claims 2 to 9 characterised in that the control lever (30) extends substantially parallel to a mounting wall (12), and moreover with its pivot axis (28) lying parallel to the mounting wall, in that the deflection member (32) extends at least partially into an aperture (14) of the mounting wall (12), and the rotation axis (28) lies in the vicinity of the mounting wall (12).

**Revendications**

1. Pince de blocage à renvoi pour un système de ceinture de sécurité

a) comportant un organe de blocage fixe et un organe de blocage mobile,

b) qui, à partir d'une contrainte de tirage prescrite sur la ceinture, peut s'appliquer en position de blocage contre la ceinture, et celle-ci en position de blocage contre l'organe de blocage fixe,

c) étant précisé que l'organe de blocage mobile est un coin de blocage qui s'appuie contre une rampe de glissement fixe qui présente pour le coin de blocage une surface de glissement orientée obliquement dans la direction de passage de la ceinture et obliquement dans la direction de l'organe de blocage fixe,

d) étant précisé qu'un organe de commande entrainé par la ceinture collabore avec une surface active qui est disposé sous un certain angle par rapport à la direction de passage de la ceinture et

e) étant précisé que lorsque se produit l'application du blocage, le coin de blocage présente, dans la direction de passage de la ceinture, une composante de la vitesse qui, à l'instant en question, est égale à la vitesse de tirage de la ceinture, caractérisée en ce que

f) l'organe de commande est un levier de commande (30) qui peut tourner autour d'un axe fixe (28),

g) sur le levier de commande (30) est disposé un organe de renvoi (32) pour la ceinture (34),

h) au levier de commande (30) correspond une butée (38) de fin de course,

h) au coin de blocage (48) correspond un organe de commande (52),

i) lequel organe de commande (52) collabore avec la surface active (56).

2. Pince de blocage à renvoi selon la revendication 1, caractérisée en ce que le levier de commande (30) est disposé des deux côtés du coin de blocage (38); en ce que dans le levier de commande (30) est prévue une lumière (54) dont l'axe longitudinal est orienté, par rapport à la direction de passage de la ceinture, selon l'angle ($\alpha$) de la surface active (56), au moins en ce qui concerne une arête longitudinale qui forme la surface active; et en ce que dans la lumière (54) vient en prise un téton (52) qui se trouve sur le coin de blocage (48) et forme l'organe de commande.

3. Pince de blocage à renvoi selon la revendication 1, caractérisée en ce que le levier de commande (30) est disposé des deux côtés du coin de blocage (48); et en ce que sur le levier de commande (30) est disposée une butée qui s'appuie contre une surface active du coin de blocage.

4. Pince de blocage à renvoi selon la revendication 2, caractérisée en ce que la largeur de la lumière (54) est sensiblement supérieure à la dimension du téton (52) en section.

5. Pince de blocage à renvoi selon l'une des revendications 1 à 4, caractérisée en ce que l'organe de blocage fixe (22) peut coulisser dans la direction (A) de tirage de la ceinture en agissant contre un ressort.

6. Pince de blocage à renvoi selon l'une des revendications 2 à 5, caractérisée en ce que la rampe de glissement (44) et l'organe de blocage fixe (22) forment, avec un cadre (18), un ensemble fixe dans lequel le coin de blocage (48) est disposé avec possibilité d'être déplacé par le levier de commande (30).

7. Pince de blocage à renvoi selon la revendications 6, caractérisée en ce que l'organe de renvoi (32) est un galet de renvoi.

8. Pince de blocage à renvoi selon la revendication 7, caractérisée en ce que le galet de renvoi (32) correspond à une butée d'extrémité (38) disposée sur le cadre (18).

9. Pince de blocage à renvoi selon l'une des revendications 2 à 8, caractérisée en ce que sur le cadre (18) ou sur la rampe de glissement (44) sont rapportés des ressorts de rappel (64, 66) dont l'un (64) est rapporté sur le levier de commande (30) et l'autre (66) sur le coin de blocage (48).

10. Pince de blocage à renvoi selon l'une des revendications 2 à 9, caractérisée en ce que le levier de commande (30) est orienté sensiblement parallèlement à une paroi de montage (12) et, de façon plus précise, avec un axe de pivotement (28) parallèle à la paroi de montage; en ce que l'orange de renvoi (32) y pénètre au moins partiellement dans une découpe (14) de la paroi de montage (12) et que l'axe de rotation (28) se trouve près de la paroi de montage (12).

# FIG.1

FIG.2